# EUROPÄISCHE PATENTSCHRIFT

(11) **EP 0 813 983 B1**
(45) Veröffentlichungstag und Bekanntmachung des Hinweises auf die Patenterteilung: **24.10.2001**
(21) Anmeldenummer: 97109987.4
(22) Anmeldetag: 19.06.1997
(51) Int. Cl.: B60J 10/12, B60J 10/00

(54) **Randspaltabdichtungsanordnung für den Deckel eines Kraftfahrzeugschiebedachs**
Edge seat for a lid of a vehicle sliding roof
Joint périphérique pour un volet d'un toit coulissant de véhicule

(30) Priorität: 21.06.1996 DE 19624715
(43) Veröffentlichungstag der Anmeldung: 29.12.1997
(73) Patentinhaber: Meritor Automotive GmbH, 60314 Frankfurt (DE)
(72) Erfinder: Schönebeck, Horst, 63571 Gelnhausen (DE)
(74) Vertreter: Oppermann, Ewald, Dipl.-Ing.

(56) Entgegenhaltungen:
- EP-A- 0 479 636
- DE-B- 2 929 837
- DE-U- 9 418 090
- GB-A- 652 706

## Beschreibung

Die Erfindung bezieht sich auf eine Randspaltabdichtungsanordnung für den starren Deckel eines Kraftfahrzeugschiebedachs.

Derartige Randspaltabdichtungsanordnungen sollen eine wasserdichte Abdichtung des geschlossenen Deckels gegenüber dem den Deckel umgebenden Umfangsrand der den geschlossenen Deckel aufnehmenden Dachöffnung herbeiführen. Die zu diesem Zweck vorgesehene, zum Umfangsrand der Dachöffnung gerichtete Hohlkammer der Randspaltabdichtungsanordnung kann durch elastische Verformunq zwar geringe Breitenunterschiede des Randspalts und auch geringe Unebenheiten, d.h. Breitenschwankungen, an den im Idealfall durchgehend parallel ausgerichteten und mit qleichbleibendem Abstand verlaufenden Rändern bzw. Kanten der Dachöffnung und des Deckels ausgleichen, größere Unterschiede und Unebenheiten können jedoch eine wasserdichte Abdichtung mindestens erschweren. Problematisch für das Zusammenpassen des Deckels und der Dachöffnung, insbesondere wenn es sich um einen nicht besonders maßgenau herstellbaren Glasdeckel handelt, sind die aufgrund unterschiedlich großer Fertigungstoleranzen zwischen Deckel und Dachöffnung auftretenden Maßabweichungen, die mit herkömmlichen Randspaltabdichtungsanordnungen oder -profilen nicht immer zufriedenstellend, d.h. unter Erzielung einer guten wasserdichten Abdichtung, ausgleichbar sind. Der Anpreßdruck der Randspaltdichtung ist bei den beschriebenen Maßabweichungen und Unebenheiten nicht gleichmäßig über die ganze Anlagefläche am Umfangsrand der Dachöffnung verteilt, was zu örtlichen Undichtheiten führen kann.

Bei einer bekannten Randspaltabdichtungsanordnung (DE-U-94 18 090.3 , Fig. 3 und 4) befindet sich am Außenrand des mit dem Rahmenkörper einteiligen Randstreifens ein wulstartiger, im Querschnitt beispielsweise etwa kreisförmiger Fortsatz, der nach dem Umbiegen des Randstreifens in eine im Querschnitt entsprechende Ausnehmung des Rahmenkörpers unter Formschluß einknöpfbar ist. Da der Randstreifen um den Deckelumfang umlaufend gleichbleibende Abmessungen aufweist, ergibt sich nach dem Umbiegen des Randstreifens und dem Einknöpfen des Fortsatzes in die zugehörige Ausnehmung eine über alle Deckelseiten durchgehende, im Querschnitt gleichbleibende Randspaltabdichtungsanordnung. Mit dieser bekannten Randspaltdichtung können die vorstehend beschriebenen unvermeidbaren Maßabweichungen und Unebenheiten, insbesondere wenn diese beträchtlich sind, nicht vollständig ausgeglichen werden, so daß die Gefahr von wenigstens örtlichen Undichtigkeiten im Randspalt gegeben ist.

Ferner geht aus der EP-A-0 479 636 eine aus einem elastomeren Werkstoff geformte Profilanordnung hervor, die ein rohrförmiges Element von einstellbarer Form und einstellbarem Querschnitt aufweist. Diese Profilanordnung soll insbesondere die Dichtheit zwischen einer Fahrzeugtür und dem Türrahmen der Karosserie herstellen. Zur Erzielung unterschiedlicher Formen und Querschnitte des rohrförmigen Profilelements wird das an das Profil angeformte bandförmige Element mit seinem verzahnten Ende mehr oder weniger weit in einen im Profil gebildeten Spalt eingesteckt und verrastet dort mit einer Gegenverzahnung.

Bei diesem Stand der Technik handelt es sich jedoch nicht um eine auf den Deckel eines Kraftfahrzeugschiebedachs unter Bildung eines Rahmenkörpers angespritzte Randspaltabdichtungsanordnung, sondern um ein Steckprofil für Karosserieflansche. Gemäß der Lehre der EP-A-0 479 636 ist überdies keine Klemmprofilleiste vorgesehen, welche das freie Ende des bandförmigen Elements am Profilkörper einstellbar festlegen würde.

Der Erfindung liegt die Aufgabe zugrunde, eine Randspaltabdichtungsanordnung bereitzustellen, mit der auch größere Maßabweichungen und Unebenheiten im Randspalt beidennoch guter Abdichtung gegen das Eindringen von Wasser ausgleichbar sind.

Die gestellte Aufgabe wird durch die Merkmale des Patentanspruchs 1 gelöst. Erfindungsgemäß ist die Breite der Hohlkammer über eine oder auch mehrere Deckelseiten durchgehend, aber auch örtlich begrenzt veränder- und einstellbar. Zu diesem Zweck wird bei umgebogenem Randstreifen und geschlossenem Deckel der Innenflächenabschnitt des Randstreifens so an die Gegenfläche des Rahmenkörpers angelegt, daß der Hohlkammerabschnitt der Randspaltabdichtung den Randspalt allseits vollständig und mit möglichst umlaufend gleichmäßigem Anpreßdruck gegenüber dem Umfangsrand der Dachöffnung dicht schließt. Die eingestellte Relativlage zwischen Innenflächenabschnitt und Gegenfläche wird dabei durch die Klemmprofilleiste fixiert.

Um die eingestellte Lage zwischen Innenflächenabschnitt und Gegenfläche zu sichern, ist es von Vorteil, wenn diese aneinanderliegenden Flächen entsprechend Anspruch 2 mit einer Oberflächenaufrauhung versehen sind, zweckmäßig in Form einer Längsriffelung gemäß Anspruch 3.

Die Ausbildung der Klemmnut im Rahmenkörper und deren Lage bezüglich der Gegenfläche und die Ausbildung einer Abstützleiste für die Klemmprofilleiste sind in einer vorteilhaften Ausführungsform im Anspruch 4 angegeben.

Eine vorteilhafte Ausbildung der Klemmprofilleiste und die Zuordnung der einzelnen Bereiche der Klemmprofilleiste zur Klemmnut, zur Abstützleiste und zum an der Gegenfläche des Rahmenkörpers festzulegenden Außenrand des Randstreifens geht aus Anspruch 5 hervor.

Wie durch Anbringung einer Halteleiste am Außenrand des Randstreifens in Verbindung mit einer an der Klemmprofilleiste vorgesehenen Hakenleiste auf einfache Weise der Einstellweg zwischen dem Innenflächenabschnitt des Randstreifens und der Gegenfläche des Rahmenkörpers begrenzbar ist, bei gleichzeitiger Sicherung des umgebogenen Randstreifens gegen unbeabsichtigte Freigabe des Randstreifens in Richtung seiner nicht umgebogenen Lage beim Einstellvorgang, geht aus Anspruch 6 hervor.

Die Erfindung wird nachfolgend in zwei Ausführungsbeispielen anhand der beigefügten Zeichnungen näher erläutert. Darin zeigt:

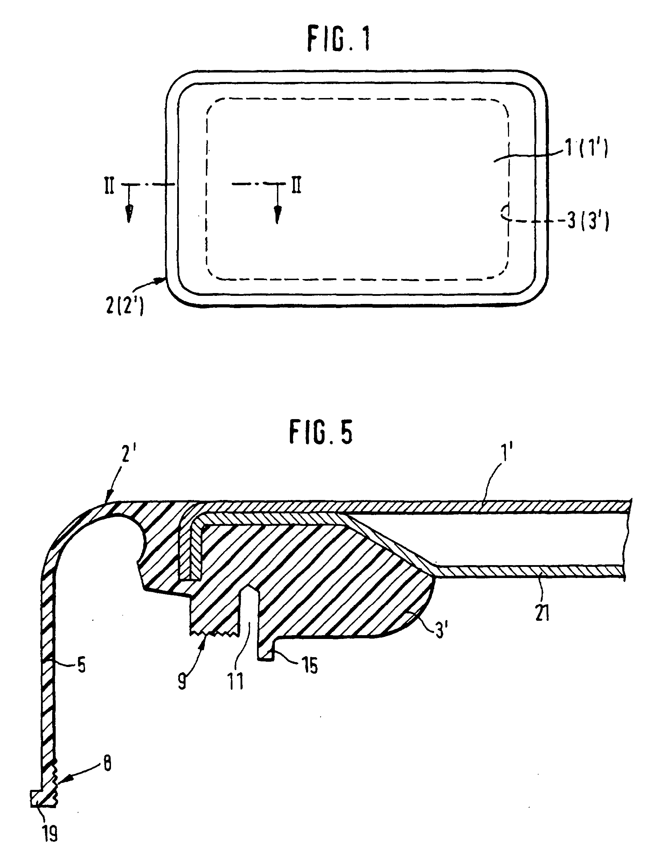

- Fig. 1: die Draufsicht auf einen mit der Randspaltabdichtungsanordnung ausgestatteten Deckel eines Kraftfahrzeugschiebedachs,
- Fig. 2: einen Schnitt entlang der Linie II-II in Fig. 1 in einer ersten einen Glasdeckel betreffenden Ausführungsform mit abgebrochen eingezeichnetem festem Dach,
- Fig. 3: einen der Fig. 2 ähnlichen Schnitt, jedoch noch ohne gebildete Hohlkammer und noch nicht am Rahmenkörper angebrachter Klemmprofilleiste,
- Fig. 4: einen weiteren der Fig. 2 ähnlichen Schnitt, jedoch in einer gegenüber Fig. 2 veränderten Einstellung der Hohlkammerbreite und
- Fig. 5: einen der Fig. 3 ähnlichen Schnitt in einer zweiten einen Blechdeckel betreffenden Ausführungsform ohne eingezeichnete Klemmprofilleiste.

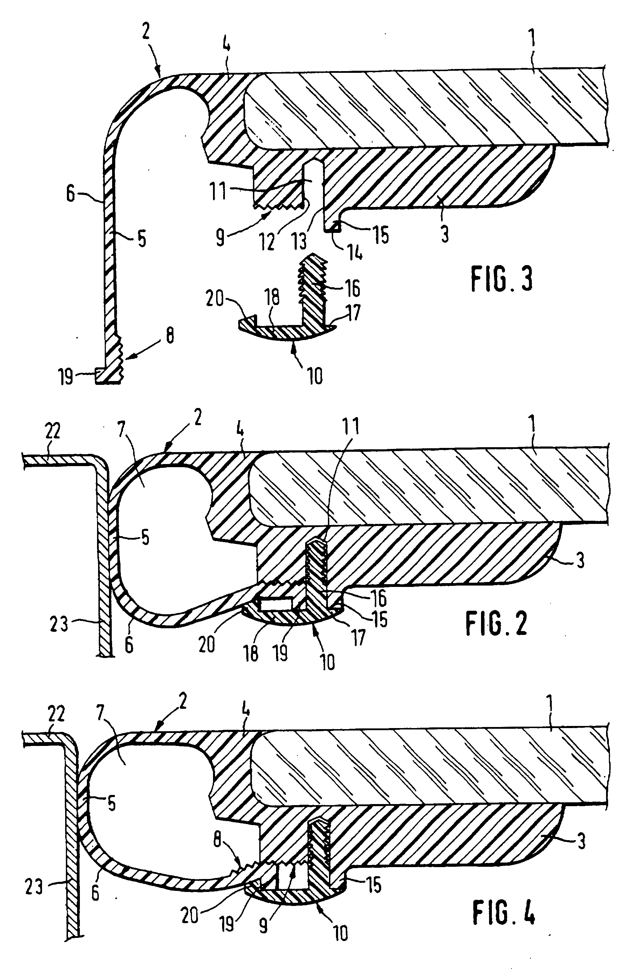

In den Zeichnungen sind nur die bezüglich der Randspaltabdichtungsanordnung interessierenden Bereiche des starren Deckels und in den Fig. 2 und 4 zusätzlich die Lage der Randspaltabdichtungsanordnung mit Bezug auf das feste Fahrzeugdach dargestellt. Der starre Deckel kann Bestandteil jeder der bekannten Schiebedachbauformen sein, beispielsweise Bestandteil eines Nur-Schiebedachs, eines Schiebehebedachs, einer nur vorn scharnierten Lüftungsklappe oder auch eines Oberfirst-Schiebedachs.

Bei der in den Fig. 2 bis 4 gezeigten ersten Ausführungsform, bei welcher der starre Deckel als Glasdeckel 1 ausgebildet ist, ist der Randbereich des Glasdeckels 1 umlaufend mit einer angegossenen oder angespritzten bzw. angeschäumten rahmenartigen Einfassung 2 aus Kunststoff versehen, die beispielsweise aus Polyvinylchlorid oder einem elastomeren Kunststoff geeigneten Härtegrades, beispielsweise auf Polyurethanbasis, besteht. Die rahmenartige Einfassung 2 bildet einen Rahmenkörper 3, der an der unteren Fläche des Glasdeckels 1 anliegt und den Umfangsrand des Glasdeckels 1 umgreift. Die rahmenartige Einfassung 2 endet oben in der Ebene der oberen Fläche des Glasdeckels 1, so daß eine glatte bündige Lage zwischen der oberen Fläche 4 der Einfassung 2 und dem Glasdeckel 1 erzielt ist.

Von dem Rahmenkörper 3 erstreckt sich ein einteilig angeformter freier Randstreifen 5 nach außen und unten, der mit seiner äusseren Fläche 6 in einem glatten stufenlosen Übergang an die obere Fläche 4 des Rahmenkörpers 3 anschließt. Der Randstreifen 5 bildet die Wandung einer Hohlkammer 7, wenn der Randstreifen 5 nach innen umgebogen und mit seinem Außenrand der Deckelumfangskante benachbart an dem Rahmenkörper 3 von unten her auf noch zu beschreibende Weise und wie in den Fig. 2 und 4 dargestellt festgelegt ist.

Am Außenrand des Randstreifens 5 ist zu diesem Zweck ein Innenflächenabschnitt 8 vorgesehen, der an einer komplementären Gegenfläche 9 mittels einer Klemmprofilleiste 10 zur Einstellung der Breite der Hohlkammer 7 einstellbar festgelegt werden kann. Hierbei greift die Klemmprofilleiste 10 in eine umlaufend in den Rahmenkörper 3 eingeformte Klemmnut 11 ein.

Der Innenflächenabschnitt 8 des Randstreifens 5 und die komplementäre Gegenfläche 9 an dem Rahmenkörper 3 sind zur Verbesserung der durch die Klemmprofilleiste 10 festgelegten Einstellposition für die Breite der Hohlkammer 7 mit einer Oberflächenaufrauhung versehen, im gezeichneten Beispiel jeweils mit einer zum Deckelumfangsrand parallelen Längsriffelung. Der längsgeriffelte Innenflächenabschnitt 8 und die ebenfalls längsgeriffelte Gegenfläche 9 können von übereinstimmender Breite sein, wie insbesondere Fig. 2 verdeutlicht.

Die umlaufend nach unten offene und parallel zu dem Deckelumfangsrand in den Rahmenkörper 3 eingeformte Klemmnut 11 weist zwei etwa parallel zueinander ausgerichtete Seitenwände 12 und 13 auf. Die bezüglich des Deckelumfangsrands äußere Seitenwand 12 endet an der Gegenfläche 9, während die bezüglich des Deckelumfangsrands innere Seitenwand 13 bis zu einer Abstützfläche 14 einer von dem Rahmenkörper 3 nach unten vorstehenden Abstützleiste 15 für die Klemmprofilleiste 10 reicht.

Die Klemmprofilleiste 10 besitzt einen im wesentlichen T-förmigen Querschnitt, dessen Steg 16 zum klemmenden Eingriff in die Klemmnut 11 ausgebildet ist und beispielsweise eine "Tannenbaum-Profilierung" aufweist. Weiterhin besitzt die Klemmprofilleiste einen schmaleren inneren Flanschabschnitt 17 und einen breiteren äußeren Flanschabschnitt 18. Der innere Flanschabschnitt 17 ist zur Anlage an die Abstützfläche 14 der Abstützleiste 15 bestimmt, wenn die Klemmprofilleiste 10 mit ihrem Steg 16 in die Klemmnut 11 vollständig eingreift, wie in den Fig. 2 und 4 dargestellt ist. Der äußere Flanschabschnitt 18 liegt auf noch näher zu erläuternde Weise auf dem Außenrand des Randstreifens 5 an, um den Innenflächenabschnitt 8 an der Gegenfläche 9 festzulegen, wenn die Klemmprofilleiste 10 an dem Rahmenkörper 3 angebracht ist.

Am Außenrand des Randstreifens 5 ist eine aus dem Randstreifen vorspringende Halteleiste 19 vorgesehen. Bei umgebogenen Randstreifen 5 weist diese Halteleiste 19 nach unten, wie wiederum die Fig. 2 und 4 veranschaulichen. Über diese Halteleiste 19 drückt der äußere Flanschabschnitt 18 der Klemmprofilleiste 10 den Innenflächenabschnitt 8 an die Gegenfläche 9 an. An den äußeren Flanschabschnitt 18 ist außen eine Hakenleiste 20 angeformt, die an dem Randstreifen 5 nach Anbringung der Klemmprofilleiste 10 von unten anliegt. Der Einstellweg zwischen dem Innenflächenabschnitt 8 und der Gegenfläche 9 ist einerseits durch Anschlag der Halteleiste 19 an den Steg 16 der Klemmprofilleiste 10 und andererseits durch Anschlag der Halteleiste 19 an die Hakenleiste 20 begrenzt, wie aus Fig. 2 bzw. Fig. 4 hervorgeht.

Zur Formung der Hohlkammer 7 wird ausgehend von der in Fig. 3 gezeigten Lage der die Hohlkammerwandung bildende Randstreifen 5 der an den starren Deckel angespritzten Randspaltabdichtungsanordnung in Richtung auf den Deckelumfangsrand allseits nach innen umgebogen. Dabei kommt der geriffelte Innenflächenabschnitt 8 zur Anlage an die geriffelte Gegenfläche 9 am Rahmenkörper 3. Anschließend wird die Klemmprofilleiste mit ihrem Steg 16 in die Klemmnut 11 eingepreßt. Dadurch wird die Breite der Hohlkammer 7 fixiert. Soll der Querschnitt bzw. die Breite der Hohlkammer 7 insgesamt oder partiell verändert werden, wird die Klemmprofilleiste 10 insgesamt bzw. partiell geringfügig aus der Klemmnut 11 (um das Höhenmaß der Riffelungen) herausgezogen, wodurch der Eingriff zwischen Innenflächenabschnitt 8 und Gegenfläche 9 insgesamt bzw. partiell aufgehoben ist. Anschließend werden der Innenflächenabschnitt 8 und die Gegenfläche 9 parallel zueinander verlagert, worauf nach Erreichen der gewünschten Hohlkammerabmessungen die Klemmprofilleiste 10 insgesamt bzw. partiell wieder in die Klemmnut 11 eingepreßt wird. Beim Herausziehen des Stegs 16 aus der Klemmnut 11 verhindert die Hakenleiste 12 im Zusammenwirken mit der Halteleiste 19 ein vollständiges Austreten des Randstreifens 5 aus dem Spalt zwischen der Gegenfläche 9 und dem äußeren Flanschabschnitt 18 der Klemmprofilleiste 10. Wie bereits erwähnt sorgt die Hakenleiste 20 nicht nur für einen wegbegrenzenden Anschlag der Halteleiste 19, sondern unterstützt auch den Randstreifen 5 von unten, so daß der Innenflächenabschnitt 8 und die Gegenfläche 9 im Eingriff gehalten werden.

Bei dem Ausführungsbeispiel gemäß Fig. 5 ist anstelle eines Glasdeckels ein Blechdeckel 1' vorgesehen. Dieser ist in seinem Randbereich wie üblich durch einen Verstärkungsrahmen 21 unterlegt. Blechdeckel 1 und Verstärkungsrahmen 21 sind am Außenrand nach unten abgekantet, und die rahmenartige Einfassung 2' ist unter Erfassung dieser Abkantungen an den Blechdeckel 1' angespritzt. Die rahmenartige Einfassung 2' und der Rahmenkörper 3' sind im übrigen so ausgebildet, wie das mit Bezug auf das erste Ausführungsbeispiel beschrieben worden ist.

In den Fig. 2 und 4 ist das feste Fahrzeugdach 22, das sich bei geschlossenem Deckel in einer Ebene mit dem Deckel befindet, dargestellt. Die Dachöffnung, die in der Deckelschließlage von dem Deckel 1 bzw. 1' unter Zwischenlage des die Hohlkammer 7 aufweisenden Abschnitts der Randspaltabdichtungsanordnung geschlossen wird, wird durch eine senkrecht nach unten gerichtete Abkantung des festen Fahrzeugdachs 22 begrenzt. Die Abkantung 23 bildet den Umfangsrand der Dachöffnung und die Anlagefläche für die Randspaltabdichtungsanordnung.

Die Klemmprofilleiste 10 kann als Extruderprofil aus einem geeigneten Kunststoff hergestellt sein.

## Patentansprüche

1. Randspaltabdichtungsanordnung für den starren Deckel (1; 1') eines Kraftfahrzeugschiebedachs, die unter Bildung eines Rahmenkörpers (3; 3') an den Umfangsrand des Deckels angespritzt ist und einen sich von dem Rahmenkörper (3; 3') nach außen erstreckenden freien Randstreifen (5) aufweist, der unter Bildung einer Hohlkammer (7) umbiegbar ist und mit seinem Außenrand der Deckelumfangskante benachbart an dem Rahmenkörper von unten her festlegbar ist, wobei an dem Außenrand des Randstreifens (5) ein Innenflächenabschnitt (8) vorgesehen ist, der nach der die Hohlkammer (7) bildenden Umbiegung des Randstreifens (5) an einer Gegenfläche (9) des Rahmenkörpers (3; 3') mittels einer Klemmprofilleiste (10) zur Einstellung der Breite der Hohlkammer (7) einstellbar festgelegt ist, wobei die Klemmprofilleiste (10) in eine Klemmnut (11) des Rahmenkörpers (3; 3') eingreift.

2. Randspaltabdichtungsanordnung nach Anspruch 1, wobei der Innenflächenabschnitt (8) und die Gegenfläche (9) jeweils mit einer Oberflächenaufrauhung versehen sind.

3. Randspaltabdichtungsanordnung nach Anspruch 2, wobei die Oberflächenaufrauhung als zu dem Deckelumfangsrand parallele Längsriffelung ausgebildet ist.

4. Randspaltabdichtungsanordnung nach einem der Ansprüche 1 bis 3, wobei die Klemmnut (11) umlaufend nach unten offen und parallel zu dem Deckelumfangsrand in den Rahmenkörper (3; 3') eingeformt ist und zwei etwa parallel zueinander ausgerichtete Seitenwände aufweist, von denen die bezüglich des Deckelumfangsrands äußere Seitenwand (12) an der Gegenfläche (9) endet und die innere Seitenwand (13) bis zu einer Abstützfläche (14) einer von dem Rahmenkörper (3; 3') nach unten vorstehenden Abstützleiste (15) für die Klemmprofilleiste (10) reicht.

5. Randspaltabdichtungsanordnung nach den Ansprüchen 1 und 4, wobei die Klemmprofilleiste (10) einen im wesentlichen T-förmigen Querschnitt mit einem Steg (16), einem inneren Flanschabschnitt (17) und einem äußeren Flanschabschnitt (18) aufweist, dessen Steg (16) zum klemmenden Eingriff in die Klemmnut (11) ausgebildet ist, dessen innerer Flanschabschnitt (17) zur Anlage an die Abstützfläche (14) der Abstützleiste (15) bestimmt ist und dessen äußerer Flanschabschnitt (18) dem Außenrand des Randstreifens (5) anliegt, um den Innenflächenabschnitt (8) an der Gegenfläche (9) festzulegen, wenn die Klemmprofilleiste (10) an dem Rahmenkörper (3; 3') angebracht ist.

6. Randspaltabdichtungsanordnung nach Anspruch 5, wobei am Außenrand des Randstreifens (5) eine aus dem Randstreifen (5) vorspringende Halteleiste (19) vorgesehen ist, über welche der äußere Flanschabschnitt (18) der Klemmprofilleiste (10) den Innenflächenabschnitt (8) an die Gegenfläche (9) andrückt, und wobei außen am äußeren Flanschabschnitt (18) eine Hakenleiste (20) angeformt ist, die dem Randstreifen (5) von unten anliegt, wobei der Einstellweg zwischen dem Innenflächenabschnitt (8) und der Gegenfläche (9) einerseits durch Anschlag der Halteleiste (19) an den Steg (16) der Klemmprofilleiste (10) und andererseits durch Anschlag der Halteleiste (19) an die Hakenleiste (20) begrenzt ist.

## Claims

1. Marginal gap sealing arrangement for the rigid cover (1; 1') of a motor vehicle sunroof extruded onto the circumferential border of the cover accompanied by the formation of a frame body (3; 3') and having a free marginal strip (5) extending outwards from the frame body (3; 3') and which can be bent round accompanied by the formation of a hollow chamber (7) and which can be fixed from below by its outer border to the cover circumferential edge adjacent to the frame body and on the outer border of the marginal strip (5) is provided an inner surface portion (8), which is adjustably fixed following the bending round of the marginal strip (5) forming the hollow chamber (7) to a mating surface (9) of the frame body (3; 3') by means of a clamping profile strip (10) for adjusting the width of the hollow chamber (7), the clamping profile strip (10) engaging in a clamping groove (11) of the frame body (3; 3').

2. Marginal gap sealing arrangement according to claim 1, wherein the inner surface portion (8) and mating surface (9) are in each case provided with a surface roughening.

3. Marginal gap sealing arrangement according to claim 2, wherein the surface roughening is constructed as longitudinal corrugations parallel to the cover circumferential border.

4. Marginal gap sealing arrangement according to one of the claims 1 to 3, wherein the clamping groove (11) is circumferentially shaped in downwardly open manner parallel to the cover circumferential edge in the frame body (3; 3') and has two approximately parallel side walls, whereof the outer side wall (12) with respect to the cover circumferential border ends at the mating surface (9) and the inner side wall (13) extends up to a support surface (14) of a support strip (15) for the clamping profile strip (10) extending downwards from the frame body (3; 3').

5. Marginal gap sealing arrangement according to claims 1 and 4, wherein the clamping profile strip (10) has a substantially T-shaped cross-section with a web (16), an inner flange portion (17) and an outer flange portion (18), whose web (16) is constructed for clamping engagement in the clamping groove (11), whose inner flange portion (17) is intended to engage on the support surface (14) of the support strip (15) and whose outer flange portion (18) engages on the outer border of the marginal strip (5), in order to fix the inner surface portion (8) on the mating surface (9) when the clamping profile strip (10) is fitted to the frame body (3; 3').

6. Marginal gap sealing arrangement according to claim 5, wherein a retaining strip (19) projecting from the marginal strip (5) is provided on the outer border of said marginal strip (5) and by means of which the outer flange portion (18) of the clamping profile strip (10) presses the inner surface portion (8) onto the mating surface (9) and wherein a hook strip (20) is externally shaped on the outer flange portion (18) and engages from below on the marginal strip (5), the adjusting path between the inner surface portion (8) and the mating surface (9) being bounded on the one hand by the abutment of the retaining strip (19) on the web (16) of the clamping profile strip (10) and on the other by the retaining strip (19) abutting against the hook strip (20).

## Revendications

1. Agencement de joint périphérique pour le volet rigide (1 ; 1') d'un toit coulissant de véhicule, qui est moulé par injection sur le bord périphérique du volet en formant un corps de cadre (3 ; 3') et qui présente une bande de bordure (5) libre s'étendant depuis le corps de cadre (3 ; 3') vers l'extérieur, ladite bordure étant susceptible d'être repliée en formant une cavité (7) et d'être fixée avec son bord extérieur sur le corps de cadre depuis le bas, au voisinage de l'arête périphérique du volet, dans lequel sur le bord extérieur de la bande de bordure (5) est prévu un tronçon de surface intérieur (8) qui, après le pliage de la bande de bordure (5) formant la cavité, est fixé de manière réglable sur une surface antagoniste (9) du corps de cadre (3 ; 3') au moyen d'une baguette profilée de serrage (10) pour régler de manière variable la largeur de la cavité (7), la baguette profilée de serrage s'engageant dans une gorge de serrage (11) du corps de cadre (3 ; 3').

2. Agencement de joint périphérique selon la revendication 1, dans lequel le tronçon de surface intérieur (8) et la surface antagoniste (9) sont respectivement pourvus d'une rugosité de surface.

3. Agencement de joint périphérique selon la revendication 2, dans lequel la rugosité de surface est réalisée sous forme de stries longitudinales parallèles au bord périphérique du volet.

4. Agencement de joint périphérique selon l'une quelconque des revendications 1 à 3, dans lequel la gorge de serrage (11) est formée sur la périphérie dans le corps de cadre (3 ; 3'), ouverte vers le bas et parallèle au bord périphérique du volet et présentent deux parois latérales orientées approximativement parallèles l'une à l'autre, dont la paroi latérale (12) extérieure par rapport au bord périphérique du volet se termine au niveau de la surface antagoniste (9), et la paroi latérale intérieure (13) va jusqu'à une surface d'appui (14) d'une baguette d'appui (15), faisant saillie vers le bas depuis le corps de cadre (3 ; 3'), pour la baguette profilée de serrage (10).

5. Agencement de joint périphérique selon les revendications 1 et 4, dans lequel la baguette profilée de serrage (10) présente une section transversale (17) sensiblement en forme de T avec une traverse (16), une portion de bride intérieure (17) et une portion de bride extérieure (18), dont la traverse (16) est réalisée pour s'engager par serrage dans la gorge de serrage (11), la portion de bride intérieure (17) est destinée à venir en appui contre la surface d'appui (14) de la baguette d'appui (15) et la portion de bride extérieure (18) est en appui sur le bord extérieur de la bande de bordure (5) pour fixer le tronçon de surface intérieur (8) sur la surface antagoniste (9) lorsque la baguette profilée de serrage (10) est montée sur le corps de cadre (3 ; 3').

6. Agencement de joint périphérique selon la revendication 5, dans lequel, sur le bord extérieur de la bande de bordure (5) est prévue une baguette de retenue (19) faisant saillie hors de la bande de bordure (5), par l'intermédiaire de laquelle la portion de bride extérieure (18) de la baguette profilée de serrage (10) presse le tronçon de surface intérieur (8) contre la surface antagoniste (9), et dans lequel une baguette à crochets (20) est formée à l'extérieur sur la portion de bride extérieure (18), ladite baguette à crochets étant en appui par le bas sur la bande de bordure (5), la course de réglage entre le tronçon de surface intérieur (8) et la surface antagoniste (9) étant limitée, d'une part par venue en butée de la baguette de retenue (19) contre la traverse (16) de la baguette profilée de serrage (10), et d'autre part par venue en butée de la baguette de retenue (19) contre la baguette à crochets (20).
